# EUROPÄISCHE PATENTSCHRIFT

(11) **EP 2 181 248 B1**
(45) Veröffentlichungstag und Bekanntmachung des Hinweises auf die Patenterteilung: **14.10.2015**
(21) Anmeldenummer: 08735198.7
(22) Anmeldetag: 12.04.2008
(51) Int. Cl.: F01K 17/06, F22B 35/00, F22G 5/12, F26B 3/00, F26B 3/10, F26B 3/08, F26B 25/22

(54) **VERFAHREN ZUM BETREIBEN EINES DAMPFTURBINENKRAFTWERKS SOWIE VORRICHTUNG ZUM ERZEUGEN VON DAMPF**
METHOD FOR THE OPERATION OF A STEAM TURBINE POWER PLANT, AND STEAM GENERATING APPARATUS
PROCÉDÉ D'EXPLOITATION D'UNE CENTRALE TURBO-ÉLECTRIQUE À VAPEUR ET DISPOSITIF DE GÉNÉRATION DE VAPEUR

(30) Priorität: 16.05.2007 DE 102007023336
(43) Veröffentlichungstag der Anmeldung: 05.05.2010
(73) Patentinhaber: RWE Power Aktiengesellschaft, 45128 Essen (DE)
(72) Erfinder: BLOCK, Ditmar, 51109 Köln (DE); KLUTZ, Hans-Joachim, 50374 Erftstadt (DE)
(74) Vertreter: Kierdorf Ritschel
(86) Internationale Anmeldenummer: PCT/EP2008/002912
(87) Internationale Veröffentlichungsnummer: WO 2008/138441

(56) Entgegenhaltungen:
- AT-B- 345 769
- DE-A1- 3 835 428
- DE-A1- 19 612 186
- DE-A1- 19 627 626
- DE-B- 1 053 526
- GB-A- 981 774
- JP-A- 62 174 292
- US-A- 3 034 771

## Beschreibung

Die Erfindung betrifft ein Verfahren zum Betreiben eines Dampfturbinenkraftwerks mit wenigstens einem mit einem festen körnigen Brennstoff befeuerten Dampferzeuger, wobei der Brennstoff zunächst einer indirekten Trocknung in einem Wirbelschichttrockner unterzogen wird und der Wirbelschichttrockner zumindest teilweise mit Dampf aus dem Wasser-Dampf-Kreislauf des Dampferzeugers beheizt wird.

Die Erfindung betrifft weiterhin eine Einrichtung zum Erzeugen von Dampf, umfassend wenigstens einen Trockner zur Trocknung grubenfeuchter Braunkohle, wenigstens einen mit Braunkohle befeuerten Dampferzeuger und wenigstens eine dem Dampferzeuger nachgeschaltete Dampfturbine mit Generator, wobei der Trockner wenigstens einen mit Heizdampf beaufschlagten Wärmetauscher aufweist, der an den Wasser-Dampf-Kreislauf des Dampferzeugers angeschlossen ist.

Aus der DE 195 18 644 A1 sind beispielsweise ein Verfahren und eine Einrichtung zum Erzeugen von Prozessdampf zum Antreiben einer Turbine bekannt. Hierzu wird Braunkohle in einem staubbefeuerten Kessel verbrannt. Bei dem Verfahren wird die zu trocknende Braunkohle kontinuierlich in einem Wirbelschichttrockner getrocknet und der Wirbelschichttrockner wird unter Anderem mit Anzapfdampf aus dem Wasser-Dampf-Kreislauf der Kraftwerksanlage indirekt beheizt, um zumindest einen Teil der Feuchte als Brüden aus der Braunkohle zu entfernen. Der ausgetriebene Brüden und die getrocknete Kohle werden aus dem Trockner abgezogen. Um die Trocknung energetisch möglichst effizient ausführen zu können, wird in der DE 195 18 644 A1 vorgeschlagen, dass wenigstens ein Teilstrom des Brüdens verdichtet und dem Wärmetauscher als Heizmedium zugeführt wird, wobei der Brüden zumindest teilweise kondensiert. Der Trockner wird weiterhin durch einen weiteren Wärmetauscher indirekt beheizt, der mit einem Teilstrom des Prozessdampfs vor oder nach dessen zumindest teilweiser Entspannung unter zumindest teilweiser Bildung von Kondensat durchströmt wird.

Grundsätzlich ist es bekannt, wie auch bereits in der DE 195 18 644 ausgeführt wird, dass durch eine Trocknung der Braunkohle vor der Verfeuerung in dem Dampferzeuger eines Kraftwerks eine deutliche Erhöhung des Wirkungsgrades erzielt werden kann. Durch die Trocknung kann der Wassergehalt, der bei grubenfeuchter Braunkohle etwa 45 bis 65 % beträgt, auf etwa 10 bis 25 % verringert werden. Dies hat unter Anderem zur Folge, dass die Verdampfung dieser Feuchte im Brennraum des Dampferzeugers nicht mehr erforderlich ist, sodass zusätzliche Emissionen und Wärmeverluste vermieden werden können.

Das Vorgesagte gilt selbstverständlich auch für andere feuchte organische Brennstoffe.

Es ist grundsätzlich aus verschiedensten Verfahren bekannt, zumindest einen Teil der für den Trocknungsprozess des Brennstoffs im Trockner verwendeten Energie unmittelbar aus dem Wasser-Dampf-Kreislauf des Kraftwerksprozesses zu beziehen. Üblicherweise erfolgt die Beheizung des Trockners durch Anzapfdampf der Hauptturbine des Kraftwerks. Dies ist beispielsweise auch in dem in der DE 103 19 477 A1 beschriebenen Verfahren so vorgesehen. Dort wird der aus der Trocknung des Brennstoffs anfallende Brüden ausschließlich zur Vorwärmung des Kesselspeisewassers verwendet.

Die im Trockner einzustellende Temperatur ist normalerweise eine Funktion der Feuchtigkeit des Brennstoffs. Üblicherweise werden Wirbelschichttrockner auf den maximal möglichen Wassergehalt des Brennstoffs eingestellt. In der Praxis unterliegt allerdings der Feuchtigkeitsgehalt des Brennstoffs Schwankungen. Beispielsweise bei Einsatz von Braunkohle als Brennstoff kann der Feuchtigkeitsgehalt bzw. Wassergehalt zwischen 45 und 65 Gewichtsprozent schwanken. Solche Feuchtigkeitsschwankungen des Brennstoffs konnten bisher bei der Prozessführung nur unzureichend berücksichtigt werden. Bis jetzt wird die Temperatur im Trockner ausschließlich über eine Drosselung des Heizdampfs beeinflusst. Wird weniger Trockenleistung als veranschlagt und somit weniger Dampfdruck benötigt, wird der Dampfdruck einsprechend gedrosselt. Die Regelung der Trocknertemperatur auf diese Art und Weise ist verhältnismäßig einfach, jedoch energetisch nicht optimal.

Aus der DE 196 12 186 A1 ist ein Verfahren zum Trocknen von Rohbraunkohle bekannt, bei dem die vorzerkleinerte Rohbraunkohle einer Wirbelschichttrocknung unterzogen wird, die aus der Wirbelschichttrocknung abgezogenen Brüden entstaubt werden und eine Teilmenge der entstaubten Brüden verdichtet für die indirekte Beheizung der Trocknung eingesetzt wird. Eine andere Teilmenge der Brüden wird in die Wirbelschichttrocknung als Wirbelmedium zurückgeführt. Zusätzlich zu den verdichteten Brüden wird Anzapfdampf aus der Turbine für die indirekte Beheizung der Wirbelschichttrocknung eingesetzt. Die Kühlung des aus der indirekten Beheizung abgezogenen Brüdenkondensats erfolgt durch Wärmetausch mit Wasser aus dem Wasser-Dampfkreislauf des Dampfturbinenkraftwerks.

Ein anderes Trocknungsverfahren ist beispielsweise aus der DE 1 053 526 A1 bekannt. Diese Druckschrift beschreibt ein Braunkohlekraftwerk mit einer Hauptturbine sowie einer Dampf- und Rauchgas beschickten Kohletrocknungsanlage. Der für die Kohlentrocknungsanlage benötigte Heißdampf wird einer Gegendruckturbine entnommen, die an eine den höheren Druckstufen der Hauptturbine zugeordnete Entnahmestelle angeschlossen und auf konstanten Druck in der Trocknungsanlage gesteuert ist. Ein vergleichbares Verfahren ist aus der GB 981,774 A bekannt.

Die DE 38 35 428 A1 offenbart ein Verfahren zur Erzeugung elektrischer Energie durch Verbrennung von Rohbraunkohle die in einem beheizten Wirbelbetttrockner getrocknet wird, wobei als Trägermedium für den Wirbelbetttrockner ein Rauchgasteilstrom verwendet wird und das bei der Trocknung anfallende Gemisch aus Rauchgas und Wasserdampf zumindest teilweise ohne vorherige Entstaubung der Feuerung zugeführt wird. Der überwiegende Teil der für die Trocknung benötigten Wärme wird über ein Wärmetauschersystem in den Trockner eingekoppelt. Hierzu wird einer Turbinenstufe bereits weitestgehend abgearbeiteter Anzapfdampf entnommen, der im Wärmetauschersystem des Trockners kondensiert wird und erneut in den Wasser-Dampfkreislauf des Kraftwerks eingespeist wird.

Der Erfindung liegt daher die Aufgabe zugrunde, ein Verfahren sowie eine Einrichtung der vorgenannten Art in Hinblick auf den Gesamtwirkungsgrad zu verbessern.

Der Gegenstand der Erfindung ist durch die unabhängigen Ansprüche 1 und 10 definiert.

Bei einem Verfahren der eingangs genannten Art wird deshalb erfindungsgemäß vorgeschlagen, dass die Temperaturregelung im Trockner in Abhängigkeit vom Feuchtigkeitsgehalt des Brennstoffs zweistufig erfolgt, wobei zunächst die Temperatur des Wirbelschichttrockners über den Dampfdruck des Heizdampfs geregelt wird und dieser Regelung nachgeschaltet eine Regelung der Überhitzungstemperatur des Heizdampfs in Abhängigkeit vom Solldruck des Heizdampfs vorgenommen wird.

Die erfindungsgemäße Regelung berücksichtigt in vorteilhafter Art und Weise den Wärmeübergang an den Heizflächen im Trockner. Die Heizflächen werden nur bei Kondensation des Heizdampfs effizient genutzt. Bei Kondensation des Heizdampfs wird die frei werdende Kondensationswärme genutzt.

Nach dem erfindungsgemäßen Verfahren lässt sich die Temperatur im Trockner unter Berücksichtigung eines optimalen Wärmeübergangs an den Heizflächen konstant halten. Würde der Trockner mit einem um ca. 60 K überhitzten Dampf betrieben, würden sich die Wärmeübergangsbedingungen verschlechtern und ein Teil der Heizfläche würde nur dazu benötigt, die Dampfüberhitzung abzubauen, bevor die für die Wärmeübertragung effiziente Dampfkondensation einsetzt. In der Folge erfordert die schlechtere Wärmeübertragung entweder eine größere Wärmetauscherfläche oder einen höheren Heizdampfdruck. Durch die erfindungsgemäß miteinander verschachtelte Regelung von Druck- und Überhitzungstemperatur kann der Trockner grundsätzlich mit geringerem Druck betrieben werden, was aus Sicht der Thermodynamik und des Kraftwerksprozesses vorteilhaft ist.

Zweckmäßigerweise wird die Überhitzungstemperatur auf etwa 1 bis 5 K eingestellt.

Bei einer besonders vorteilhaften Variante des Verfahrens gemäß der Erfindung erfolgt die Druckregelung des Heizdampfs für den Trockner mittels wenigstens einer zusätzlich zur Dampfturbine des Dampferzeugungsprozesses vorgesehenen Gegendruckturbine. Dies hat den Vorzug, dass die unterschiedlichen Heizdampfdrücke bei Volllast und Teillast des Trockners in kinetische Energie umgesetzt werden können. Das Druckgefälle zwischen dem Anzapfdruck an der Hauptturbine des Kraftwerks und dem tatsächlich am Trockner erforderlichen Druck wird dann vorteilhafterweise zur Stromerzeugung genutzt.

Besonders bevorzugt erfolgt die Regelung der Überhitzungstemperatur durch eine Einspritzkühlung mit Wasser.

Zweckmäßigerweise wird die Einspritzkühlung des Heizdampfs hinter der Gegendruckturbine vorgenommen.

Die Einspritzkühlung kann mit Wasserüberschuss zur thermodynamisch erforderlichen Wassermenge erfolgen, beispielweise mit dem 1- bis 7-fachen der thermodynamisch erforderlichen Wassermenge, um eine niedrige Überhitzung von 1-5 K zu erreichen. Um den Wärmeübergang im Trockner nicht negativ zu beeinträchtigen, wird das Überschusswasser vor Eintritt in den Wärmetauscher des Wirbelschichttrockners abgeschieden.

Zweckmäßigerweise wird die Gegendruckturbine überbrückt, wenn das Druckgefälle an dieser zu gering ist. Eine solche Überbrückung ist auch bei Ausfall der Gegendruckturbine zweckmäßig.

Bei einer vorteilhaften Variante des Verfahrens ist vorgesehen, den im Wirbelschichttrockner anfallenden Brüden zur Vorwärmung des Kesselspeisewassers zu verwenden.

Die Einrichtung zum Erzeugen von Dampf nach der Erfindung, umfassend wenigstens einen Trockner zur Trocknung grubenfeuchter Braunkohle, wenigstens einen mit Braunkohle befeuerten Dampferzeuger und wenigstens eine dem Dampferzeuger nachgeschaltete Dampfturbine mit Generator, wobei der Trockner wenigstens einen mit Heizdampf beaufschlagten Wärmetauscher aufweist, der an dem Wasser-Dampf-Kreislauf des Kraftwerks angeschlossen ist, zeichnet sich dadurch aus, dass dem Wärmetauscher wenigstens eine weitere Turbine zur Regelung der Trocknertemperatur vorgeschaltet ist.

Die dem Trockner vorgeschaltete Turbine ist zweckmäßigerweise als Gegendruckturbine ausgebildet, die einen Generator treibt.

Bei mehreren parallel geschalteten Trocknersträngen können mehrere Gegendruckturbinen auf einer Welle angeordnet sein und einen gemeinsamen Generator antreiben, wodurch die mechanischen Verluste und die Investitionskosten minimiert werden.

In Strömungsrichtung des Heizdampfs hinter der dem Trockner vorgeschalteten Turbine ist eine Einspritzkühlung zur Regelung der Überhitzungstemperatur des Dampfs vorgesehen.

Die Erfindung wird nachstehend anhand eines in dem beiliegenden Fließbild dargestellten Dampferzeugungsprozesses veranschaulicht.

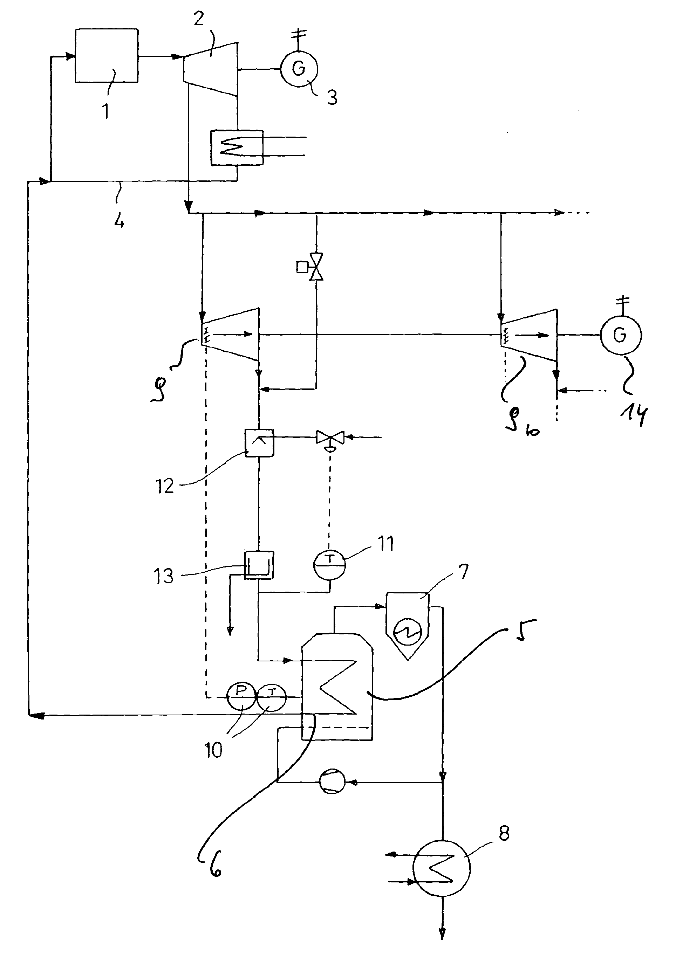

Der in der Zeichnung dargestellte Kraftwerksprozess umfasst einen Dampferzeuger 1, eine erste Turbine 2 und einen ersten Generator 3, die die Hauptkomponenten in dem Wasser-Dampf-Kreislauf 4 darstellen.

Der Dampferzeuger 1 ist beispielsweise als staubbefeuerter Kessel ausgebildet, in dem Braunkohle als Brennstoff verfeuert wird. Die Braunkohle wird in dem mit 5 bezeichneten Trockner vorgetrocknet. Der Trockner 5 ist in bekannter Art und Weise als Wirbelschichttrockner ausgebildet, in diesem wird die fluidisierte Kohle indirekt über Wärmetauscher 6 beheizt. Die beispielsweise einen Feuchtigkeitsgehalt oder Wassergehalt von 60 Gewichtsprozent aufweisende Braunkohle wird in dem Trockner bei einer Temperatur von etwa 110°C auf eine Restfeuchtigkeit von 12 Gewichtsprozent getrocknet, bevor sie einer Verbrennung in dem Dampferzeuger 1 zugeführt wird. Die hierzu benötigte Energie wird hauptsächlich in Form von Anzapfdampf aus der ersten Turbine 2 des Kraftwerks in den Trockner 5 eingekoppelt. Der etwa mit 6 bar zur Verfügung stehende Heizdampf aus dem Niederdruckteil der ersten Turbine 2 durchströmt, wie nachstehend noch zu beschreiben, einen Wärmetauscher 6 des Trockners 5. Hierdurch wird die in dem Trockner 5 fluidisierte, d. h. im Wirbelbett befindliche Kohle indirekt beheizt. Der aus dem Trockner 5 abgezogene Brüden wird in einem Elektrofilter 7 entstaubt und anschließend in dem Brüdenkondensator 8 wieder kondensiert. Ein Teil des aus dem Trockner 5 abgezogenen Brüdens kann zur indirekten Beheizung des Trockners 5 in einem weiteren Wärmetauscher verwendet werden. (Diese Variante ist in der Zeichnung nicht dargestellt.) Ebenso kann ein Teilstrom des Brüdens zur Fluidisierung der Kohle im Trockner verwendet werden. Die in dem Brüdenkondensator 8 anfallende Kondensationswärme kann beispielsweise zur Vorheizung des Kesselspeisewassers verwendet werden.

Wie eingangs bereits erwähnt wurde, fällt der Anzapfdampf aus der ersten Turbine 2 mit einem Druck von etwa 6 bar an und ist verhältnismäßig stark überhitzt. Dieser hat beispielsweise noch eine Temperatur von etwa 280°C.

Erfindungsgemäß wird die im Trockner 5 einzustellende Temperatur von beispielsweise 110°C über den Druck des Heizdampfs mittels einer zweiten Turbine 9 geregelt, die als Gegendruckturbine ausgebildet ist. Die Temperatur im Trockner 5 wird durch eine Kaskadenregelung aus Druck- und Temperaturregelung konstant gehalten. Hierzu wird der Turbinendruck der zweiten Turbine 9 über die Temperatur- und Druckregeleinrichtung 10 geregelt, dabei ist die Führungsgröße für die Regelung des Turbinendrucks die Temperatur im Trockner. Dies erfolgt über eine Verstellung der Leitschaufeln der Turbine 9. Die Trocknertemperatur von beispielsweise 110°C ist eine Funktion des gewünschten Wassergehalts. Dies ergibt sich im vorliegenden Fall beispielsweise aus dem Feuchtigkeitsgehalt der getrockneten Braunkohle von etwa 12 Gewichtsprozent.

Der hinter der zweiten Turbine 9 anfallende Heizdampf ist beispielsweise mit einer Temperatur von ca. 60 K überhitzt, was bei bei einem erforderlichen Heizdampfdruck von z.B. 3,5 bar (Kondensationstemperatur = 130 °C) zu viel ist, um eine sofortige Kondensation im Trockner zu bewirken, die für einen optimalen Wärmeübergang und für die Nutzung der Kondensationswärme erforderlich ist. Aus diesem Grund ist erfindungsgemäß neben der Temperatur- und Druckregeleinrichtung 10 eine weitere Temperaturregeleinrichtung 11 zur Regelung der Überhitzungstemperatur des Heizdampfs vorgesehen.

Die Temperaturregeleinrichtung 11 ist mit einem Einspritzkühler 12 gekoppelt, über den die Überhitzungstemperatur durch Einspritzung von Kaltwasser in den Heizdampf steuerbar ist. Die Temperaturregeleinrichtung 11 regelt die Überhitzungstemperatur des Heizdampfs in Abhängigkeit vom Heizdampfdruck im Wärmetauscher des Trockners. Ziel der Regelung ist es, den Dampf hinter der zweiten Turbine 9 auf eine Überhitzungstemperatur von nur 1 bis 5 K zu kühlen. Hierzu wird in den Einspritzkühler 12 Einspritzwasser mit einem Überschuss des etwa 1 bis 7-fachen der thermodynamisch notwendigen Menge eingespritzt. Das Überschusswasser wird in einem nachgeschalteten Wasserabscheider 13 abgezogen.

Die zweite Turbine 9 und bei mehreren Trocknersträngen die weiteren Turbinen 9b, c, d... treiben einen gemeinsamen zweiten Generator 14, dessen elektrische Energie ebenso wie die elektrische Energie des ersten Generators 3 in das Netz eingespeist wird. Auf diese Art und Weise lässt sich der Gesamtwirkungsgrad des Kraftwerkprozesses um 0,2 bis 0,4 Prozentpunkte steigern, was beachtlich ist.

### Bezugszeichenliste

- 1: Dampferzeuger
- 2: erste Turbine
- 3: erster Generator
- 4: Wasser-Dampf-Kreislauf
- 5: Trockner
- 6: Wärmetauscher
- 7: Elektrofilter
- 8: Brüdenkondensator
- 9: zweite Turbine
- 10: Temperatur- und Druckregeleinrichtung
- 11: Temperaturregeleinrichtung
- 12: Einspritzkühler
- 13: Wasserabscheider
- 14: Generator

## Patentansprüche

1. Verfahren zum Betreiben eines Dampfturbinenkraftwerks mit wenigstens einem mit einem festen körnigen Brennstoff befeuerten Dampferzeuger, wobei der Brennstoff zunächst einer indirekten Trocknung in einem Trockner unterzogen und der Trockner zumindest teilweise mit Dampf aus dem Wasser-Dampf-Kreislauf des Dampferzeugers beheizt wird, **dadurch gekennzeichnet, dass** die Temperaturregelung im Trockner in Abhängigkeit vom Feuchtigkeitsgehalt des Brennstoffs zweistufig erfolgt, wobei zunächst die Temperatur des Trockners über den Dampfdruck des Heizdampfs geregelt wird und dieser Regelung nachgeschaltet eine Regelung der Überhitzungstemperatur des Heizdampfs in Abhängigkeit vom Solldruck des Heizdampfes folgt.

2. Verfahren nach Anspruch 1, **dadurch gekennzeichnet, dass** die Überhitzungstemperatur auf einen Wert zwischen 1 bis 5 K eingestellt wird.

3. Verfahren nach einem der Ansprüche 1 oder 2, **dadurch gekennzeichnet, dass** die Druckregelung des Heizdampfs mittels wenigstens einer Gegendruckturbine erfolgt.

4. Verfahren nach einem der Ansprüche 1 bis 3, **dadurch gekennzeichnet, dass** die Regelung der Überhitzungstemperatur durch eine Einspritzkühlung des Heizdampfs mit Wasser erfolgt.

5. Verfahren nach einem der Ansprüche 3 oder 4, **dadurch gekennzeichnet, dass** eine Einspritzkühlung des Heizdampfs vorgesehen ist.

6. Verfahren nach einem der Ansprüche 3 bis 5, **dadurch gekennzeichnet, dass** die Einspritzkühlung mit Wasserüberschuss zur thermodynamisch erforderlichen Wassermenge erfolgt.

7. Verfahren nach Anspruch 6, **dadurch gekennzeichnet, dass** das Überschusswasser vor Eintritt in den Wärmetauscher des Trockners abgeschieden wird.

8. Verfahren nach einem der Ansprüche 5 bis 7, **dadurch gekennzeichnet, dass** die Gegendruckturbine überbrückt wird, wenn das Druckgefälle an dieser zu gering ist.

9. Verfahren nach einem der Ansprüche 1 bis 8, **dadurch gekennzeichnet, dass** der Brüden des Trockners zur Vorwärmung des Kesselspeisewassers verwendet wird.

10. Einrichtung zum Erzeugen von Dampf, umfassend wenigstens einen Trockner (5) zur Trocknung grubenfeuchter Braunkohle, wenigstens einen mit Braunkohle befeuerten Dampferzeuger (1) und wenigstens eine dem Dampferzeuger nachgeschaltete Dampfturbine mit Generator, wobei der Trockner (5) wenigstens einen mit Heizdampf beaufschlagten Wärmetauscher (6) aufweist, der an den Wasser-Dampf-Kreislauf (4) des Dampferzeugers (1) angeschlossen ist, wobei dem Wärmetauscher (6) wenigstens eine weitere Turbine (9) zur Regelung der Trocknertemperatur vorgeschaltet ist und der weiteren Turbine (9) ein Einspritzkühler (12) zur Regelung der Überhitzungstemperatur des Heizdampfs nachgeschaltet ist.

11. Einrichtung nach Anspruch 10, **dadurch gekennzeichnet, dass** die dem Trockner (5) vorgeschaltete Turbine (9) als Gegendruckturbine ausgebildet ist, die einen Generator (14) treibt.

## Claims

1. Method for operating a steam turbine power plant with at least one steam generator which is fired with a solid, granular fuel, wherein the fuel is first subject to an indirect drying in a drier and the drier is at least partially heated with steam from the water-steam cycle of the steam generator, **characterized in that** temperature controlling in the drier is carried out in two stages in dependpence upon the moisture content of the fuel, wherein first of all the temperature of the drier is controlled via the steam pressure of the heating steam and downstream of this controlling, a controlling of the superheating temperature of the heating steam is carried out in dependence upon the nominal pressure of the heating steam.

2. Method according to Claim 1, **characterized in that** the superheating temperature is set at a value of between 1 and 5 K.

3. Method according to one of Claims 1 or 2, **characterized in that** pressure controlling of the heating steam is carried out by means of at least one back-pressure turbine.

4. Method according to one of Claims 1 to 3, **characterized in that** controlling of the superheating temperature is carried out by means of injection cooling of the heating steam with water.

5. Method according to one of Claims 3 or 4, **characterized in that** injection cooling of the heating steam is provided.

6. Method according to one of Claims 3 to 5, **characterized in that** the injection cooling is carried out with water surplus to the thermodynamically required amount of water.

7. Method according to Claim 6, **characterized in that** the surplus water is separated out before entry into the heat exchanger of the drier.

8. Method according to one of Claims 5 to 7, **characterized in that** the back-pressure turbine is bypassed if the pressure drop at this is too low.

9. Method according to one of Claims 1 to 8, **characterized in that** the vapour of the drier is used for preheating the boiler feed water.

10. Device for generating steam, comprising at least one drier (5) for drying pit-wet brown coal, at least one steam generator (1) which is fired with brown coal, and at least one steam turbine, with a generator, which is connected downstream to the steam generator, wherein the drier (5) has at least one heat exchanger (6) which is exposed to admission of heating steam and connected to the water-steam cycle (4) of the steam generator (1), wherein at least one additional turbine (9) is connected upstream to the heat exchanger (6) for controlling the drier temperature and for controlling the superheating temperature of the heating steam an injection cooler (12) is connected downstream of the additional turbine (9).

11. Device according to Claim 10, **characterized in that** the turbine (9) which is connected upstream to the drier (5) is formed as a back-pressure turbine which drives a generator (14).

## Revendications

1. Procédé pour faire fonctionner une centrale turboélectrique à vapeur comprenant au moins un générateur de vapeur alimenté par un combustible solide granulaire, le combustible étant initialement soumis à un séchage indirect dans un sécheur et le sécheur étant au moins en partie chauffé avec de la vapeur provenant du circuit eau-vapeur du générateur de vapeur, **caractérisé en ce que** la régulation de température dans le sécheur s'effectue en deux étapes en fonction du taux d'humidité du combustible, la température du sécheur étant initialement régulée par le biais de la pression de vapeur de la vapeur chaude et suite à cette régulation, une régulation de la température de surchauffe de la vapeur chaude est effectuée en fonction de la pression de consigne de la vapeur chaude.

2. Procédé selon la revendication 1, **caractérisé en ce que** la température de surchauffe est ajustée à une valeur comprise entre 1 et 5 K.

3. Procédé selon l'une quelconque des revendications 1 ou 2, **caractérisé en ce que** la régulation de pression de la vapeur chaude s'effectue au moyen d'au moins une turbine à contrepression.

4. Procédé selon l'une quelconque des revendications 1 à 3, **caractérisé en ce que** la régulation de la température de surchauffe s'effectue par le refroidissement par injection de la vapeur chaude avec de l'eau.

5. Procédé selon l'une quelconque des revendications 3 ou 4, **caractérisé en ce qu'**un refroidissement par injection de la vapeur chaude est prévu.

6. Procédé selon l'une quelconque des revendications 3 à 5, **caractérisé en ce que** le refroidissement par injection s'effectue avec un excès d'eau par rapport à la quantité d'eau requise du point de vue thermodynamique.

7. Procédé selon la revendication 6, **caractérisé en ce que** l'excès d'eau est séparé avant l'entrée dans l'échangeur de chaleur du sécheur.

8. Procédé selon l'une quelconque des revendications 5 à 7, **caractérisé en ce que** la turbine à contrepression est pontée si le gradient de pression au niveau de celle-ci est trop faible.

9. Procédé selon l'une quelconque des revendications 1 à 8, **caractérisé en ce que** la vapeur chaude du sécheur est utilisée pour le préchauffage de l'eau d'alimentation de la chaudière.

10. Dispositif de génération de vapeur, comprenant au moins un sécheur (5) pour sécher de la lignite humide de la mine, au moins un générateur de vapeur (1) alimenté avec de la lignite, et au moins une turbine à vapeur montée en aval du générateur de vapeur, avec un générateur, le sécheur (5) présentant au moins un échangeur de chaleur (6) sollicité par de la vapeur chaude, qui est raccordé au circuit eau-vapeur (4) du générateur de vapeur (1), en amont de l'échangeur de chaleur (6) étant montée au moins une turbine supplémentaire (9) pour la régulation de la température du sécheur et un refroidisseur par injection (12) étant monté en aval de la turbine supplémentaire (9) pour la régulation de la température de surchauffe de la vapeur chaude.

11. Dispositif selon la revendication 10, **caractérisé en ce que** la turbine (9) montée en amont du sécheur (5) est réalisée sous forme de turbine à contrepression qui entraîne un générateur (14).
